Europäisches Patentamt

(19) European Patent Office

Office européen des brevets

(11) Publication number: **0 120 845**
**B1**

(12) **EUROPEAN PATENT SPECIFICATION**

(45) Date of publication of patent specification: **09.09.87**

(51) Int. Cl.⁴: **F 16 D 69/02**

(21) Application number: **82903505.4**

(22) Date of filing: **30.09.82**

(86) International application number:
**PCT/US82/01367**

(87) International publication number:
**WO 84/01412 12.04.84 Gazette 84/10**

(54) **A BRAKE PAD FOR REDUCING BRAKE NOISE.**

(43) Date of publication of application:
**10.10.84 Bulletin 84/41**

(45) Publication of the grant of the patent:
**09.09.87 Bulletin 87/37**

(84) Designated Contracting States:
**DE FR GB**

(56) References cited:
FR-A-1 079 566
GB-A- 278 913
GB-A- 624 614
GB-A- 656 324
GB-A- 758 615
GB-A-1 177 046
GB-A-1 515 670
US-A- 480 982
US-A-1 844 461
US-A-3 891 398
US-A-4 200 173
US-A-4 315 563

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **BRACKEN, William, Joseph**
**31134 West Chicago**
**Livonia, MI 48150 (US)**
Inventor: **SAKIOKA, Johnny, Katsui, Jr.**
**48135 Bayshore Drive**
**Belleville, MI 48111 (US)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

This invention relates to brake assemblies and, more particularly, to a brake pad construction for reducing brake noise.

Brakes are an essential part of a motor vehicle. Brakes, whether they be disc brakes or drum brakes, often produce noise. The noise can vary in nature and has been called brake squeal, creep and groan, pinch-out squeal, and wire brush. This brake noise is undesirable because it interferes with the quiet ride of the motor vehicle. In addition, the operator may believe that the brakes are not operating in a proper manner because of the noise. The operator may thereby feel insecure about driving the vehicle.

Many efforts have been made to reduce the noise of brakes. The brake pads have often been made with quieter materials. In addition, efforts have been made to clean the drum or rotor from particulates which may produce noise. It is also known that slight lubrication of the rotating member can reduce noise without diminishing the braking effect of the brakes.

Lubricants have been incorporated in the brake pad itself. Graphite particles have been dispersed in the brake lining material up to a 10% concentration. Lubricating discs or rectangular shaped inserts have been embedded within the brake lining. Because the lubricating particles or inserts were embedded within the brake lining, the lubricant was often wiped off or otherwise dispersed from the lubricated rotor section before the lubricated rotor section engaged the leading edge of the brake pad. Effective lubrication of the rotor to reduce brake noise in this fashion would necessitate increasing the amount of lubricant concentration throughout the entire pad. On the other hand, diminished braking ability of the pads limits the increase of lubricant concentration.

It has been determined that most brake noise emanates from a leading portion or leading contact edge of the brake pad. It is, therefore, desirable to put lubricant on the rotating member in a fashion that would prevent the lubricant from being wiped off or otherwise dispersed before that lubricated section of the rotor engages the leading edge of the brake lining. It is desired to have the concentration of lubricant vary throughout the brake pad such that the leading edge of the brake lining engages the lubricant simultaneous with or immediately after the lubricant is applied to the rotor.

GB—A—785615 discloses a brake lining for brake shoes of the type made of the same material thoughout the body of the lining and in which a dry lubricant such as graphite is incorporated in the body of the lining. Graphite is incorporated in the brake lining material so that it is evenly disseminated in the body of the lining.

US—A—4315563 discloses a disc brake assembly including a pair of friction pads which are provided on both sides of the disc and a member designed to remove abrasion powder adhering to the disc at the time of engagement of the disc with the friction pads.

According to the invention there is provided a brake pad for frictional engagement to a rotatable member, said brake pad having a brake lining characterised in that the brake lining includes a leading section including a dry lubricating material adapted to lubricate said rotatable member upon engagement of said brake pad to said rotatable member, and a trailing section having a higher frictional coefficient than said leading section for frictionally engaging a section of said rotatable member after said rotatable member section is lubricated by said lubricating material.

An actuator such as a caliper, when actuated, moves the brake pads into frictional engagement with the rotor. As the rotor rotates, one section of the rotor at a time abuts the lubricating section and is lubricated thereby. The rotor section is simultaneously in engagement with the leading contact edge of the brake lining or moves a small distance to then become engaged with the leading contact edge of the brake lining.

In this fashion, lubricant is efficiently transferred to the rotor and effectively passed under the leading contact edge of the brake lining before the lubricant is dispersed or wiped off. In this fashion, the lubricant is most effective in reducing the brake noise caused by a leading contact edge of the brake lining.

The invention will now be described further by way of example with reference to the accompanying drawings in which:

Figure 1 is a perspective view of a disc brake assembly incorporating brake pads according to one embodiment of the invention;

Figure 2 is a perspective view of one embodiment of the brake pad.

Figure 3 is a plan view of the brake pad shown in Figure 2;

Figure 4 is a perspective view of a second embodiment of a brake pad;

Figure 5 is a plan view of the brake pad shown in Figure 4;

Figure 6 is a perspective view of a third embodiment of a brake pad; and

Figure 7 is a perspective view of a fourth embodiment of a brake pad.

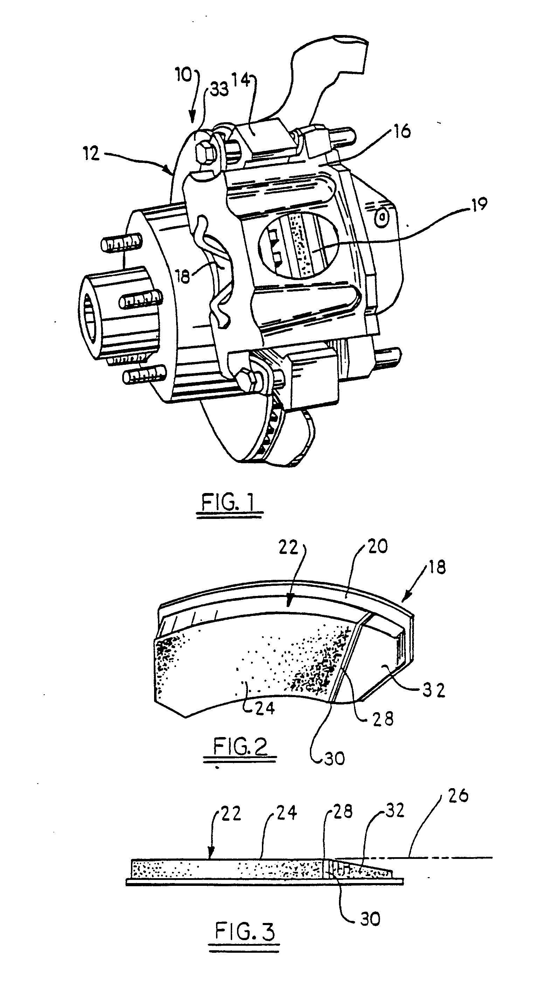

Referring to Figure 1, a disc brake assembly 10 includes a rotor 12, a stationary torque member 14 and a caliper 16. The caliper 16 is mounted to the torque member 14 and straddles the rotor 12. The caliper 16 has mounted thereto two brake pads 18 and 19 that are frictionally engageable to each side of the rotor.

Brake pads 18 and 19 are substantively identical. One is a mirror image of the other and, hence, further reference will only be made to one brake pad 18 unless otherwise indicated. Brake pad 18, as shown in Figures 2 and 3, has a backing plate 20 attached to a lining 22. The lining 22 has a braking surface 24 defined in a braking plane 26 as shown in Figure 3. The lining 22 has a leading contact edge 28, a graphite insert 30, and a chamfered section 32. A graphite insert 30 is bonded to lining 22 adjacent the leading contact edge 28. The graphite insert 30 extends the full width of lining 22. A chamfered section 32 is bonded to the front side of the graphite insert 30. The chamfered section 32 tapers forwardly and away from the braking plane 26. Both the lining 22 and chamfered section 32 are made from a friction material of conventional nature. One suitable material could be TP1353M manufactured by Thiokol.

When the brake is actuated, the caliper 16 moves the pads 18 into engagement with the rotor 12. The rotor surface section 33 rotating into the brake pad will first contact the graphite insert 30 and be lubricated by the graphite rubbing off onto the rotor. The rotor section 33 then passes under the leading contact edge 28 of lining 22 immediately after being lubricated by the graphite insert. The rotor then passes under the remainder of surface 24 of the brake lining 22 which effectively brakes the rotor.

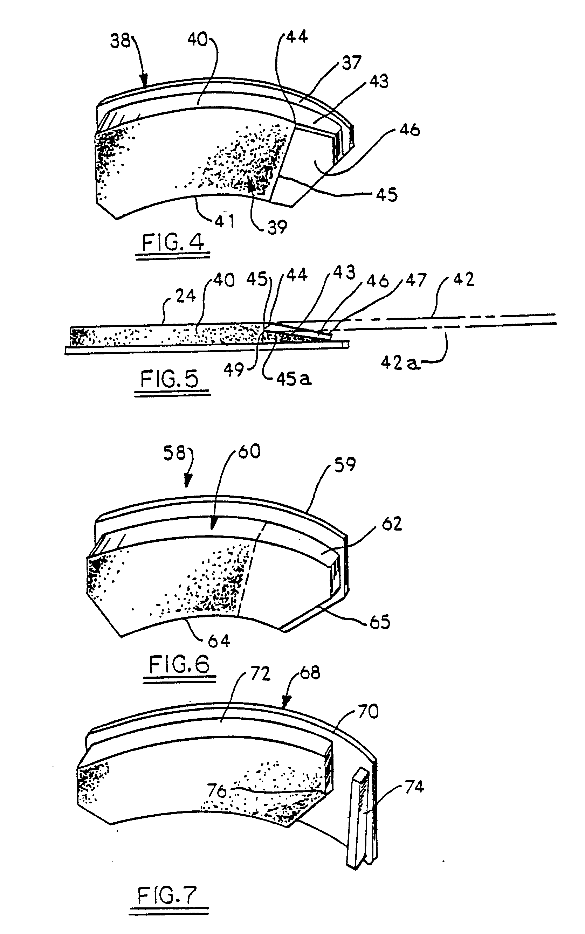

Figures 4 and 5 disclose a second embodiment of brake pad 38 than can substitute for brake pad 18. In this embodiment, the backing plate 37 is bonded to brake lining 39 which incorporates a frictional braking section 40 that defines a braking surface 41 defined in a braking plane 42. The brake lining 39 has an integral chamfered section 43 and a front shoulder 44 at the rear end of the chamfered section 43 and front edge 45 of section 40. A graphite insert 46 is bonded to the chamfered section 43 and abuts the shoulder 44. The insert 46 extends the full width of the lining 41. The insert 46 is inclined on chamfered section 43 such that its upper surface 47 is tapered forwardly and away from plane 42.

Similarly, as with the first embodiment, a leading contact edge 45 of the braking surface 41 is adjacent the graphite insert 46. When the brakes are actuated and the pad 38 comes in contact with the rotor, section 33 of the rotor contacts the graphite immediately before engaging leading contact edge 45. The rotor section 33 then passes under the remainder of braking surface 41. As with the first embodiment, the graphite lubricates the rotor section immediately before contact of the rotor section with the leading contact edge 45. Furthermore, the second embodiment takes into account considerable wear of the lining 39. If the lining 39 becomes thin and its braking surface becomes defined in a braking plane 42a as shown in phantom, the new leading contact edge 45a as shown in phantom is moved forward. However, this new leading contact edge 45a remains immediately behind the graphite insert 46 such that the graphite insert 46 still lubricates the rotor immediately before the new leading contact edge 45a of the braking section 40 engages the rotor section. In addition, the surface of insert 46 which abuts the rotor attains a maximum dimension after the insert is worn down to the bottom point 49 of shoulder 44. The maximum dimension of the abutting surface of insert 46 prevents excessive lubrication of the rotor.

Figure 6 discloses another brake pad 58 which incorporates a backing plate 59 and a lining 60 which eliminates the need for a distinct graphite insert. Lining 60 has graphite particles distributed or interspersed throughout the material. However, the one-piece lining 60 is divided into a lead portion 62 and a remaining portion 64. The graphite material is more densely distributed throughout the lead portion 62 than it is throughout the remaining portion 64. The concentration of graphite particulates is increased 50% to 100% over conventional graphite embedded linings. In other words, the concentration of graphite particulates in the leading portion 62 can have a concentration from 10% to 20%. The leading portion 62 has a length of approximately one-third the total length of lining 60. It is believed, however, the lead portion 62 can extend from approximately one-fourth to one-half the length of the brake lining without any significant changes in the effect of the noise reducing and braking properties of the brake pad.

The remaining portion 64 is made with a less concentration of graphite material and, hence, has a higher co-efficient of friction than the leading portion 62. Differentiated from the first two embodiments, the leading contact edge 65 of the braking surface of lining 60 is coincidental with the lubricating portion 62 rather than placed immediately behind it because the lubricating lead portion 62 also produces a braking effect. The lubricating lead portion 62 is, in effect, a lubricating brake lining; i.e., it lubricates and contributes to the overall braking effort. However, as with the first two embodiments, the brake pad 58 has a section having a higher co-efficient of friction placed behind a section with a lower co-efficient of friction. Hence, the rotor 12, when rotated, has section 33 first lubricated by the leading section 62 and then passed through the remaining section 64 of higher co-efficient of friction.

Figure 7 discloses another brake pad 68 having a backing plate 70 that has a lining 72 bonded thereto. A graphite block 74 is spaced forwardly from the leading edge 76 of the frictional lining 72 and bonded to the backing plate 70. The block 74 extends the full width of lining 72. The rotor 12, when rotating and when the brakes are actuated, has its section 33 engage block 74. Further rotation of rotor 12 a small arcuate amount causes the then lubricated section 33 to contact the leading edge 76 of the brake lining 72.

It has been found that all of the above embodiments have the advantages of placing lubricant on the rotor just before or simultaneously as the rotor comes into contact with the leading edge of the friction lining. Because it has been determined that the leading edge of the brake lining is the major cause of brake noise, it is important to place the lubricant on the rotor such that the full effect of the lubricant is felt by the leading edge of the brake pad.

The preferred embodiments have great advantages over other brake pads that have lubricant discs embedded within the midsection of the lining. The midsection of the lining of the conventional brake pads wipes off most of the lubricant from the rotor section before the rotor section rotates around to contact the leading edge of the friction lining. In addition, by having the lubricant applied in the proximity of the leading edge of the lining, the rotor does not disperse the lubricant even though the rotor may be rapidly rotating. The rotor section 33 speeds to rotate only a small amount, if at all, before contacting the leading edge of the brake lining.

Even though positioning the lubricant at a rear edge of the brake pad is better than at a midsection of the brake pad, the leading position is preferred. If the lubricating section was applied at the rear edge of the brake pad, a substantial portion of the lubricant would be dispersed off of the rotor due to the rapid rotation of the rotor before the lubricated rotor section engages the leading edge of the brake lining.

In this fashion, a disc brake assembly is constructed that most advantageously lubricates a rotor section before or simultaneously as the rotor section abuts a leading edge of the brake lining.

Variations and modifications of the present invention are possible without departing from its scope and spirit as defined by the appended claims.

Industrial Applicability

This invention has industrial applicability to motor vehicles and provides an effective and quiet brake.

**Claims**

1. A brake pad (18) for frictional engagement to a rotatable member (12), said brake pad (18) having a brake lining (22) characterised in that the brake lining (22) includes a leading section (32) including a dry lubricating material (30) adapted to lubricate said rotatable member (12) upon engagement of said brake pad (18) to said rotatable member (12), and a trailing section (24) having a higher frictional coefficient than said leading section (32) for frictionally engaging a section of said rotatable member (12) after said rotatable member section is lubricated by said lubricating material (30).

2. A disc brake pad as claimed in Claim 1, wherein said leading section (32) is a chamfered leading section tapered forwardly and away from the braking plane (26, 42) of said lining (22) and that an insert (30, 46) of solid lubricating material is bonded to said tapered section such that said lubricating material (30, 46) has a surface in said braking plane (26, 42) immediately forward of leading contact edge (28, 45) of said trailing section (24).

3. A brake pad as claimed in Claim 1, wherein said lubricating material is homogeneously mixed in said leading section (62) and said trailing section (64), the concentration of said lubricating material in said leading section (62) being greater than in the trailing section (64).

4. A brake pad as claimed in Claim 3, wherein said leading section (62) extends approximately one-third the length of said lining (60).

5. A brake pad as claimed in Claim 3, wherein, said leading section (62) extends approximately one-fourth to one-half of the length of said lining (60).

6. A brake pad as claimed in any one of Claims 3 to 5, wherein the concentration of said lubricating material in said leading section (62) is 50% to 100% greater than in said trailing section (60).

7. A brake pad as claimed in Claim 1, wherein said leading section (74) is spaced forwardly from the leading edge (76) of the trailing section (72).

**Patentansprüche**

1. Bremsklotz (18) zum reibungsmässigen Angreifen an ein drehbares Glied (12), wobei dieser Bremsklotz (18) mit einem Bremsbelag (22) versehen ist, dadurch gekennzeichnet, dass der Bremsbelag (22) einen Vorderabschnitt (32) mit einem trockenen Schmierstoff (30) zum Schmieren des besagten drehbaren Gliedes (12) bei Angriff des besagten Bremsklotzes (18) am besagten drehbaren Glied (12) und einen Hinterabschnitt (24) mit einem höheren Reibungsbeiwert als der besagte Vorderabschnitt (32) zum reibungsmässigen Angreifen an einem Abschnitt des besagten drehbaren Gliedes (12), nachdem der besagte drehbare Gliedabschnitt durch den besagten Schmierstoff (30) geschmiert worden ist, umfasst.

2. Scheibenbremsklotz nach Anspruch 1, dadurch gekennzeichnet, dass der besagte Vorderabschnitt (32) ein nach vorne und von der Bremsebene (26, 42) des besagten Belages (22) hinweg verjüngter abgeschrägter Vorderabschnitt ist, und dass ein Einsatz (30, 46) aus festem Schmierstoff so mit dem besagten verjüngten Abschnitt verbunden ist, dass der besagte Schmierstoff (30, 46) eine Oberfläche in der besagten Bremsebene (26, 42) direkt vor der vorderen Kontaktkante (28, 45) des besagten Hinterabschnittes (24) besitzt.

3. Bremsklotz nach Anspruch 1, dadurch gekennzeichnet, dass der besagte Schmierstoff homogen in besagtem Vorderabschnitt (62) und besagtem Hinterabschnitt (64) vermischt ist, wobei die Konzentration des besagten Schmierstoffes in besagtem Vorderabschnitt (62) grösser als im Hinterabschnitt (64) ist.

4. Bremsklotz nach Anspruch 3, dadurch gekennzeichnet, dass sich der besagte Vorderabschnitt (62) über annähernd ein Drittel der Länge des besagten Belages (60) erstreckt.

5. Bremsklotz nach Anspruch 3, dadurch gekennzeichnet, dass sich der besagte Vorderabschnitt (62) über annähernd ein Viertel bis zur Hälfte der Länge des besagten Belages (60) erstreckt.

6. Bremsklotz nach einem der Ansprüche 3 bis 5, dadurch gekennzeichnet, dass die Konzentration des besagten Schmierstoffes im besagten Vorderabschnitt (62) 50% bis 100% grösser als im besagten Hinterabschnitt (60) ist.

7. Bremsklotz nach Anspruch 1, dadurch gekennzeichnet, dass der besagte Vorderabschnitt (74) nach vorne von der Vorderkante (76) des Hinterabschnittes (72) beabstandet ist.

**Revendications**

1. Plaquette de frein (18) destinée à venir en contact de frottement sur un élément rotatif (12), cette plaquette de frein (18) présentant une garniture de frein (22), caractérisée en ce que la garniture de frein (22) comporte une section avant (32) qui présente un matériau lubrifiant à sec (30) destiné à lubrifier l'élément tournant (12) lors de la venue en contact de la plaquette de frein (18) avec cet élément tournant (12) et une section arrière (24) présentant un coefficient de frottement supérieur à celui de la section avant (32) et destinée à venir en contact de frottement avec une section de l'élément tournant (12) après que cette section de l'élément tournant ait été lubrifiée par ledit matériau lubrifiant (30).

2. Plaquette de frein à disque telle que revendiquée dans la revendication 1, dans laquelle la section avant (32) est une section avant biseautée s'inclinant vers l'avant et en s'éloignant du plan de freinage (26, 42) de la garniture (22) et dans laquelle une pièce rapportée (30, 46) en matériau lubrifiant solide est collée sur cette section inclinée d'une façon telle que le matériau lubrifiant (30, 46) présente une surface située dans le plan de freinage (26, 42) qui est disposée immédiatement en avant du bord de contact avant (28, 45) de la section arrière (24).

3. Plaquette de frein telle que revendiquée dans la revendication 1, dans laquelle le matériau lubrifiant est mélangé d'une manière homogène dans la section avant (62) et la section arrière (64), la concentration de ce matériau lubrifiant dans la section avant (62) étant supérieure à celle existant dans la section arrière (64).

4. Plaquette de frein telle que revendiquée dans la revendication 3, dans laquelle le bord avant (62) s'étend sur approximativement le tiers de la longueur de la garniture (60).

5. Plaquette de frein telle que revendiquée dans la revendication 3, dans laquelle la section avant (62) s'étend sur approximativement le quart à la moitié de la longueur de la garniture (60).

6. Plaquette de frein telle que revendiquée dans l'une quelconque des revendications 3 à 5, dans laquelle la concentration du matériau lubrifiant dans la section avant (62) est de 50% à 100% supérieure à celle existant dans la section arrière (60).

7. Plaquette de frein telle que revendiquée dans la revendication 1, dans laquelle la section avant (74) est disposée à une certaine distance à l'avant du bord avant (76) de la section arrière (72).

FIG. 1

FIG. 2

FIG. 3

1

FIG.4

FIG.5

FIG.6

FIG.7